# EUROPÄISCHE PATENTANMELDUNG

(11) **EP 3 238 537 A1**
(43) Veröffentlichungstag der Anmeldung: **01.11.2017**
(21) Anmeldenummer: 16167570.7
(22) Anmeldetag: 28.04.2016
(51) Int. Cl.: A01M 1/10

(54) **BIENENSTOCK UND SCHÄDLINGSFALLE FÜR DIESEN BIENENSTOCK**

(71) Anmelder: Pühringer, Thomas, 4655 Vorchdorf (AT); Färber, Markus Johannes, 4550 Kremsmünster (AT)
(72) Erfinder: Pühringer, Thomas, 4655 Vorchdorf (AT); Färber, Markus Johannes, 4550 Kremsmünster (AT)
(74) Vertreter: Jell, Friedrich

(57) **Zusammenfassung**

Es wird ein Bienenstock (100) und eine Schädlingsfalle (1) für einen Bienenstock (100) gezeigt, mit einem am Flugloch (50) des Bienenstocks (100) vorsehbaren Gehäuse (2), das einen Gehäuseboden (5) und eine, insbesondere schlitzförmige, Gehäuseöffnung (6) aufweist, und mit einem im Gehäuse (2) vorgesehenen Rückhaltemittel (9) zum Festsetzen eines über die Gehäuseöffnung (6) in das Gehäuse (2) gelangten Schädlings. Um Zuverlässigkeit und Standfestigkeit der Schädlingsfalle zu erhöhen, wird vorgeschlagen, dass das Rückhaltemittel (9) zumindest eine, der Gehäuseöffnung (6) nachgeordnete, elastische Dichtlippe (10) aufweist, die an ihrem freien Ende (11) unter elastischer Vorspannung am Gehäuseboden (5) anliegt.

## Beschreibung

Die Erfindung betrifft eine Schädlingsfalle für einen Bienenstock, mit einem am Flugloch des Bienenstocks vorsehbaren Gehäuse, das einen Gehäuseboden und eine, insbesondere schlitzförmige, Gehäuseöffnung aufweist, und mit einem im Gehäuse vorgesehenen Rückhaltemittel zum Festsetzen eines über die Gehäuseöffnung in das Gehäuse gelangten Schädlings.

Um Schädlinge davon abzuhalten, in einen Bienenstock einzudringen, sind aus dem Stand der Technik Schädlingsfallen für das Flugloch einen Bienenstocks bekannt, wobei das Gehäuse solch einer Schädlingsfalle an die Öffnung des Fluglochs dicht anlegbar ist. Die Gehäuseöffnung der Schädlingsfalle ist an die Größe des Schädlings angepasst, um das nicht erwünschte Einfangen von Bienen zu vermeiden. Im Gehäuse der Schädlingsfalle sind zudem Rückhaltemittel in Form von Klebstoffflächen vorgesehen, damit eingedrungene Schädlinge im Gehäuse festgesetzt werden. Derartige Schädlingsfallen haben unter anderem den Nachteil, dass die Klebeflächen rasch an Haftvermögen verlieren und die Rückhaltemittel so an Wirksamkeit einbüßen - wodurch ein standfestes Einfangen bzw. Festsetzen von Insekten über einen längeren Zeitraum nicht gewährleistbar ist.

Die Erfindung hat sich daher die Aufgabe gestellt, eine Schädlingsfalle ausgehend vom eingangs geschilderten Stand der Technik dahingehend zu verbessern, dass Standfestigkeit und Zuverlässigkeit der Rückhaltemittel und damit der gesamten Schädlingsfalle erhöht werden. Des Weiteren soll ihre Wartungsfreundlichkeit verbessert werden.

Die Erfindung löst die gestellte Aufgabe dadurch, dass das Rückhaltemittel zumindest eine, der Gehäuseöffnung nachgeordnete, elastische Dichtlippe aufweist, die an ihrem freien Ende unter elastischer Vorspannung am Gehäuseboden anliegt.

Weist das Rückhaltemittel zumindest eine, der Gehäuseöffnung nachgeordnete, elastische Dichtlippe auf, so kann ein besonders standfestes und zuverlässiges Rückhaltemittel geschaffen werden, welches auch weitgehend unabhängig von äußeren Einflüssen - wie etwa Witterung und Verschmutzung - in die Schädlingsfalle gelangte Schädlinge zuverlässig festsetzen kann. Liegt die elastische Dichtlippe an ihrem freien Ende unter elastischer Vorspannung am Gehäuseboden an, so ist die Gehäuseöffnung durch das erfindungsgemäße Rückhaltemittel über die Längsseite des Gehäuses auf einfache Weise verschließbar - wobei zugleich ein unidirektionales Eindringen der Schädlinge ins Innere der Schädlingsfalle sichergestellt wird. Mithilfe der Vorspannung kann nämlich standfest verhindert werden, dass die Dichtlippe von im Gehäuseinneren gefangenen Schädlingen angehoben wird - und diese aus der Falle entkommen. Eine in ihrer Funktion besonders zuverlässige Schädlingsfalle kann auf diese Weise geschaffen werden. Diese zeichnet sich auch durch ihre Standfestigkeit und hohe Wartungsfreundlichkeit aus - etwa im Gegensatz zu Rückhaltemitteln des Stands der Technik mit Klebeflächen, deren Wirkung nicht nur unzuverlässig ist relativ rasch abnimmt.

Im Allgemeinen wird festgehalten, dass die Dichtlippe aus Silikon oder silikonhaltigem Material, insbesondere als Silikonfolie, ausgebildet sein kann. Im Allgemeinen wird weiter festgehalten, dass das Gehäuse aus Kunststoff oder kunststoffhaltigem Material ausgeführt sein kann.

Erstreckt sich die Dichtlippe von einer oberen Befestigung im Gehäuse ausgehend ins Gehäuseinnere und läuft diese dem Gehäuseboden zu, so ist eine konstruktive Einfachheit des Rückhaltemittels bzw. auch deren einfache elastische Vorspannung erreichbar. Derart kann die Dichtlippe die Gehäuseöffnung zum Gehäuseinneren hin verschließen und einen unidirektionalen Zugang für den Schädling ausbilden. Eine zugleich zuverlässige Schädlingsfalle kann somit geschaffen werden.

Das Rückhaltemittel kann besonders zuverlässig gestaltet werden, wenn die Dichtlippe dem Gehäuseboden geneigt zuläuft. So ist zudem auch deren elastische Vorspannung einfach erreichbar.

Die Vorspannung der Dichtlippe ist erleichtert einstellbar, wenn die Dichtlippe zu ihrem freien Ende hin konvex gekrümmt verläuft. Auf diese Weise kann sichergestellt werden, dass ein Insekt in die erfindungsgemäße Schädlingsfalle durch Hochheben der Dichtlippe eindringen kann - während das Rückhaltemittel für ein darin festgesetztes keinen geeigneten Ansatzpunkt hierzu aufweist, womit es für dieses erschwert zu überwinden ist - es also aus der Schädlingsfalle nicht entkommen kann.

Verläuft die Dichtlippe vor ihrem konvex gekrümmten Abschnitt geradlinig, so können deren leichte Montage ermöglicht und die Zuverlässigkeit der Schädlingsfalle weiter erhöht werden. Verläuft die Dichtlippe nach ihrem konvex gekrümmten Abschnitt geradlinig aus, kann die Anliegefläche der Dichtlippe am Gehäuseboden erhöht werden. Durch die beiden vorgenannte Merkmale ist die Zuverlässigkeit der Schädlingsfalle - v. a. in Hinblick darauf, dass ein festgesetzter Schädling diese nicht mehr verlassen kann - erhöhbar.

Weist das Gehäuse eine Wanne und einen Deckel auf, wobei die Dichtlippe im Gehäuse zu ihrer Befestigung zwischen Deckel und Wanne geklemmt ist, so kann eine wartungsfreundliche Schädlingsfalle geschaffen werden, welche etwa zur Entleerung auf einfache Weise geöffnet werden kann bzw. bei welcher die Dichtlippe zur Wartung leicht austauschbar ist.

Sind zudem zwischen Wanne und Deckel mehrere Schnappverbindungen zu deren Verbindung miteinander vorgesehen, können beispielsweise Wartung und Montage der Schädlingsfalle weitgehend ohne Hilfsmittel - etwa Werkzeuge - erfolgen. Eine kostengünstige Schädlingsfalle kann demnach geschaffen werden.

Die Zuverlässigkeit der Schädlingsfalle kann verbessert werden, wenn das Gehäuse einen an die Gehäuseöffnung anschließenden Durchgangsbereich ausbildet, der mit mindestens einer Leitwand an das Rückhaltemittel anschließt. Der Durchgangsbereich kann auf den Schädling auch den Eindruck einer sicheren Spalte leifern, um sich in dieser beispielsweise zu verstecken oder von seinem Flug auszuruhen. Es zeigt sich, dass die Wahrscheinlichkeit, einen Schädling einzufangen, dadurch ebenfalls verbessert werden kann.

Läuft dabei eine erste Leitwand dem Gehäuseboden spitz zu, die den oberen Öffnungsrand der Gehäuseöffnung ausbildet, so kann auf konstruktiv einfache Weise ein sich zum Rückhaltemittel hin verjüngender Durchgangsbereich geschaffen werden.

Eine konstruktiv einfache Schädlingsfalle kann geschaffen werden, wenn die Dichtlippe an der ersten Leitwand innenliegend befestigt ist. Insbesondere lässt sich die Dichtlippe an die erste Leitwand durch eine speziell geformte Nase des Deckel andrücken, um sie einfach und sicher zu fixieren. Wird eine zweite Leitwand vom Gehäuseboden ausgebildet und verläuft diese von der Gehäuseöffnung ausgehend ansteigend in Richtung des Gehäuseinneren, so kann der Durchgangsbereich zum Rückhaltemittel hin weiter verjüngend ausgeführt werden. Auf diese Weise ist ein Trichtereffekt erzeugbar, welcher die Zuverlässigkeit der Schädlingsfalle weiter erhöhen kann.

Bildet der Gehäuseboden zudem hinter dem Rückhaltemittel eine Stufe aus, kann solch eine Stufe ein weiteres Rückhaltemittel darstellen, um den Schädling sicher in der Schädlingsfalle zu halten.

Wird die Dichtlippe von mehreren nebeneinander angeordneten Lippensegmenten ausgebildet, so können das Gewicht und auch die erforderliche elastische Vorspannung vorteilhaft reduziert und damit die von Schädlingen zum Eindringen in die Falle aufzuwendende Kraft vermindert werden Festzusetzende Schädlinge können demnach leichter in die Falle eindringen - ohne dass die Gefahr, dass bereits festgesetzte Schädlinge entkommen können, steigt. Eine besonders zuverlässigere Schädlingsfalle kann derart geschaffen werden.

Weist die Gehäuseöffnung vertikale Trennstege auf, so ist es möglich, die mechanische Stabilität der Schädlingsfalle im Bereich der Gehäuseöffnung zu erhöhen und die Montage der Schädlingsfalle im Bienenstock zu erleichtern.

Die erfindungsgemäße Schädlingsfalle kann sich insbesondere in einem Bienenstock mit einem Flugloch und mit einer an die geometrische Öffnung des Fluglochs anliegenden Schädlingsfalle bewähren.

In den Figuren ist beispielsweise der Erfindungsgegenstand anhand einer Ausführungsvariante näher dargestellt. Es zeigen
- Fig. 1: eine axonometrische Ansicht der erfindungsgemäßen Schädlingsfalle,
- Fig. 2: eine erste Schnittansicht durch die Schädlingsfalle und
- Fig. 3: eine zweite Schnittansicht durch die Schädlingsfalle.

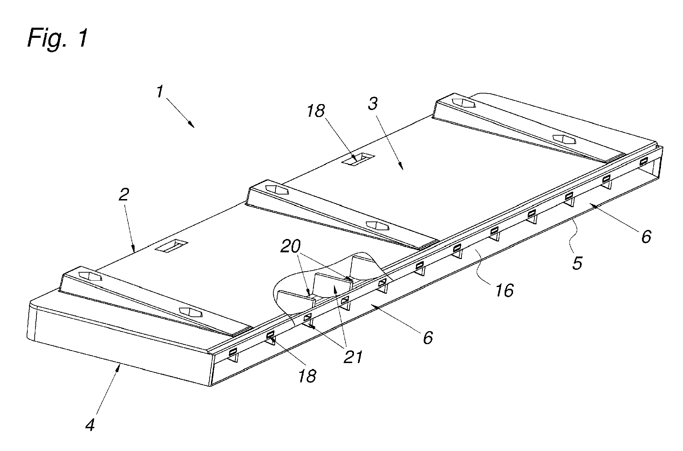

Nach Fig. 1 ist eine Schädlingsfalle 1 gezeigt, mit einem Gehäuse 2, in diesem Fall bestehend aus einem Deckel 3 und einer Wanne 4 - wobei die Wanne 4 einen Gehäuseboden 5 ausbildet. Das Gehäuse 2 weist weiters eine Gehäuseöffnung 6 auf, wobei die Höhe 7 der - im Ausführungsbeispiel schlitzförmigen - Gehäuseöffnung 6 an den zu fangenden Schädling derart angepasst ist, dass eine Biene nicht durch die Gehäuseöffnung 6 in das Gehäuseinnere 8 der Schädlingsfalle 1 eindringen, diese allerdings problemlos übersteigen kann.

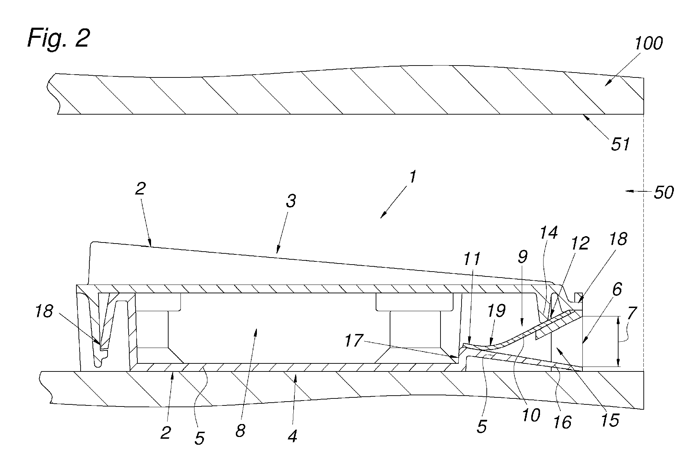

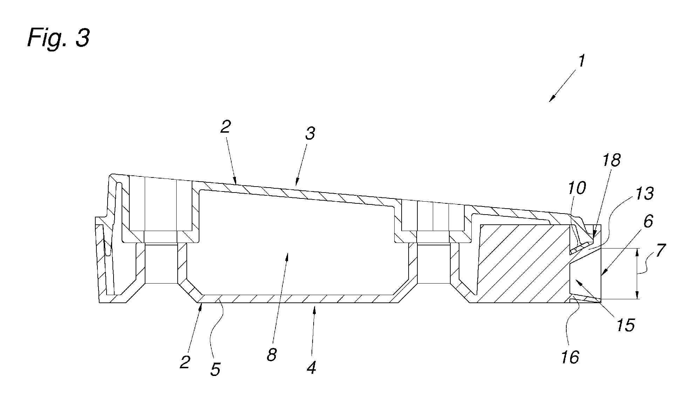

Wie im Detail den Figuren 2 und 3 zu entnehmen, ist die Gehäuseöffnung 6 durch Rückhaltemittel 9 in Form einer elastische Dichtlippe 10 verschlossen - Schädlinge können durch Anheben der Dichtlippe 10 unter dieser hindurch in das Gehäuseinnere 8 gelangen. Die Dichtlippe 10 verläuft entlang der Stirnseite des Gehäuses 2 und steht unter elastischer Vorspannung - liegt also mit ihrem freien Ende 11 am Gehäuseboden 5 an. Die Dichtlippe 10 erstreckt sich von einer oberen Befestigung 12 in Richtung des Gehäuseinneren 8 und läuft dabei dem Gehäuseboden 5 geneigt zu. Durch oder unter anderem durch das Anliegen am Gehäuseboden 5 weist die Dichtlippe 10 einen konvex gekrümmten Abschnitt 19 auf. An dieser kann unmittelbar vor dem Bereich des freien Endes 11 eine konvex Krümmung vorgesehen sein, im Ausführungsbeispiel läuft die Dichtlippe aber zum freien Ende 11 in einen geraden Abschnitt aus, um deren Anliegefläche am Gehäuseboden zu erhöhen.

Die obere Befestigung 12 der Dichtlippe 10 wird durch eine Klemmung zwischen dem Deckel 3 und der Wanne 4 erreicht. Hierzu verläuft die Dichtlippe 10 vor dem konvex gekrümmten Abschnitt 19, insbesondere im Bereich der oberen Befestigung 12, geradlinig. Des Weiteren weist die Wanne 4 eine erste Leitwand 13 auf, an welcher die Dichtlippe innenseitig flächig aufliegt. Der Deckel 3 zeigt eine Klemmnase 14, welche die Dichtlippe 10 gegen die erste Leitwand 13 presst. Zur einfachen Montage umfasst das Gehäuse 2 zwischen Wanne 4 und Deckel 3 mehrere Schnappverbindungen 18.

Der Durchgangsbereich 15 des Gehäuses 2 ist durch die erste Leitwand 13 und die zweite Leitwand 16 begrenzt und verjüngt sich ausgehend von der Gehäuseöffnung 6 in Richtung des Gehäuseinneren 8, indem die erste Leitwand 13 dem Gehäuseboden 5 spitz zuläuft. Die zweite Leitwand 16, welche der Einfachheit halber vom Gehäuseboden 5 ausgebildet wird, verläuft hingegen von der Gehäuseöffnung 6 ausgehend ansteigend in Richtung des Gehäuseinneren 5. Damit laufen die beiden Leitwände 13, 16 einander zu - womit der Gehäuseboden 5 unter anderem hinter dem Rückhaltemittel 9 eine Stufe 17 ausbildet, welche wiederum selbst als Rückhaltemittel 9 fungiert.

An den Durchgangsbereich 15 schließt das Rückhaltemittel 9, insbesondere in Form der Dichtlippe 10 an, um einen unidirektionalen Zugang für den Schädling in die Schädlingsfalle 1 zu schaffen. Der Schädling kann die Dichtlippe 10 zum Eindringen in die Schädlingsfalle 1 anheben - nach dessen Eindringen schließt diese selbsttätig aufgrund ihrer Vorspannung. Ein Entkommen des Schädlings aus der Schädlingsfalle 1 kann somit standfest verhindert werden - unter anderem eben aufgrund der Vorspannung und des konvex gekrümmten Abschnitts 19, der verhindert, dass ein in der Schädlingsfalle befindlicher Schädling unter das Ende 11 der Dichtlippe 10 gelangen und diese anheben kann.

Der Ausschnitt in Fig. 1 zeigt eine Ansicht auf die Wanne 4 des Gehäuses 2 der Schädlingsfalle 1. Es ist erkennbar, dass die Dichtlippe 10 in mehrere nebeneinander angeordnete Lippensegmente 20 unterteilt ist. Die Lippensegmente 20 der Dichtlippe 10 erstrecken sich zwischen den vertikalen Trennstegen 21, wobei die Dichtlippe 10 im Bereich der oberen Befestigung 12 nicht in Segmente unterteilt ist und sich über die gesamte Gehäuselängsseite erstreckt. Dies trägt zur besonders einfachen Montage bzw. Wartung bei. Zudem weist die schlitzförmige Gehäuseöffnung 6 der Wanne 4 mehrere vertikale Trennstege 21 auf, womit eine Erhöhung der Stabilität des Gehäuses 2 erreicht wird.

Die erfindungsgemäßen Lippensegmente 20 zeigen den Vorteil, dass Schädlinge erleichtert in die Schädlingsfalle 1 eindringen können, da diese hierfür lediglich das Gewicht eines Lippensegments 20 anheben müssen. Auch ist es unter anderem möglich, eine geringere Vorspannung vorzusehen, damit mithilfe der Dichtlippe 10 Schädlinge zuverlässig festsetzt werden, als wenn sie an ihrem Ende 11 durchgehend ausgebildet über die gesamte Stirnseite des Gehäuses 2 am Gehäuseboden 5 anzuliegen hätte. Beispielsweise muss in letzterem Fall berücksichtigt werden, dass Umwelteinflüsse die Eigenschaften und/oder Form - z. B. als Wölbung - der Dichtlippe 10 ändern.

Die erfindungsgemäße Schädlingsfalle 1 ist insbesondere im Flugloch 50 eines Bienenstocks 100 angebracht, wie in Fig. 2 dargestellt, wobei die Schädlingsfalle 1 an die geometrische Öffnung 51 des Fluglochs 50 angepasst ist. Ebenso können mehrere Schädlingsfallen 1 zur Innenauskleidung des Fluglochs 50 des Bienenstocks 100 vorgesehen sein - beispielsweise auch an der Oberseite des Fluglochs 50 -, um einen erhöhten Schutz gegenüber dem Eindringen eines Schädlings in den Bienenstock 100 zu erreichen.

## Patentansprüche

1. Schädlingsfalle für einen Bienenstock (100), mit einem am Flugloch (50) des Bienenstocks (100) vorsehbaren Gehäuse (2), das einen Gehäuseboden (5) und eine, insbesondere schlitzförmige, Gehäuseöffnung (6) aufweist, und mit einem im Gehäuse (2) vorgesehenen Rückhaltemittel (9) zum Festsetzen eines über die Gehäuseöffnung (6) in das Gehäuse (2) gelangten Schädlings, **dadurch gekennzeichnet, dass** das Rückhaltemittel (9) zumindest eine, der Gehäuseöffnung (6) nachgeordnete, elastische Dichtlippe (10) aufweist, die an ihrem freien Ende (11) unter elastischer Vorspannung am Gehäuseboden (5) anliegt.

2. Schädlingsfalle nach Anspruch 1, **dadurch gekennzeichnet, dass** die Dichtlippe (10) sich von einer oberen Befestigung (12) im Gehäuse (2) ausgehend ins Gehäuseinnere (8) erstreckt und dem Gehäuseboden (5) zuläuft.

3. Schädlingsfalle nach Anspruch 1 oder 2, **dadurch gekennzeichnet, dass** die Dichtlippe (10) dem Gehäuseboden (5) geneigt zuläuft.

4. Schädlingsfalle nach Anspruch 1, 2 oder 3, **dadurch gekennzeichnet, dass** die Dichtlippe (10) zu ihrem freien Ende (11) hin konvex gekrümmt verläuft.

5. Schädlingsfalle nach Anspruch 4, **dadurch gekennzeichnet, dass** die Dichtlippe (10) vor und/oder nach ihrem konvex gekrümmten Abschnitt (19) geradlinig verläuft.

6. Schädlingsfalle nach einem der Ansprüche 1 bis 5, **dadurch gekennzeichnet, dass** das Gehäuse (2) eine Wanne (4) und einen Deckel (3) aufweist, wobei die Dichtlippe (10) im Gehäuse (2) zu ihrer Befestigung zwischen Deckel (3) und Wanne (4) geklemmt ist.

7. Schädlingsfalle nach Anspruch 6, **dadurch gekennzeichnet, dass** zwischen Wanne (4) und Deckel (3) mehrere Schnappverbindungen (18) zu deren Verbindung miteinander vorgesehen sind.

8. Schädlingsfalle nach einem der Ansprüche 1 bis 7, **dadurch gekennzeichnet, dass** das Gehäuse (2) einen an die Gehäuseöffnung (6) anschließenden Durchgangsbereich (15) ausbildet, der mit mindestens einer Leitwand (13, 16) an das Rückhaltemittel (9) anschließt.

9. Schädlingsfalle nach einem Anspruch 8, **dadurch gekennzeichnet, dass** eine erste Leitwand (13) dem Gehäuseboden (5) spitz zuläuft, die den oberen Öffnungsrand der Gehäuseöffnung (6) ausbildet.

10. Schädlingsfalle nach Anspruch 9, **dadurch gekennzeichnet, dass** die Dichtlippe (10) an der ersten Leitwand (13) innenliegend befestigt ist.

11. Schädlingsfalle nach Anspruch 8, 9 oder 10, **dadurch gekennzeichnet, dass** eine zweite Leitwand (16) vom Gehäuseboden (5) ausgebildet wird und von der Gehäuseöffnung (6) ausgehend ansteigend in Richtung des Gehäuseinneren (8) verläuft.

12. Schädlingsfalle nach einem der Ansprüche 1 bis 11, **dadurch gekennzeichnet, dass** der Gehäuseboden (5) hinter dem Rückhaltemittel (9) eine Stufe (17) ausbildet.

13. Schädlingsfalle nach einem der Ansprüche 1 bis 12, **dadurch gekennzeichnet, dass** die Dichtlippe (10) von mehreren nebeneinander angeordneten Lippensegmenten (20) ausgebildet wird.

14. Schädlingsfalle nach einem der Ansprüche 1 bis 13, **dadurch gekennzeichnet, dass** die Gehäuseöffnung (6) vertikale Trennstege (21) aufweist.

15. Bienenstock mit einem Flugloch (50) und mit einer an die geometrische Öffnung (51) des Fluglochs (50) anliegenden Schädlingsfalle (1) nach einem der Ansprüche 1 bis 14.
